Europäisches Patentamt

European Patent Office

Office européen des brevets

(19)

(11) **EP 0 489 952 B1**

(12) **EUROPÄISCHE PATENTSCHRIFT**

(45) Veröffentlichungstag und Bekanntmachung des Hinweises auf die Patenterteilung:
**19.08.1998 Patentblatt 1998/34**

(51) Int Cl.$^6$: **G06F 7/48**

(21) Anmeldenummer: 90123865.9

(22) Anmeldetag: **11.12.1990**

(54) **Schaltungsanordnung zur digitalen Bit-seriellen Signalverarbeitung**

Circuit device for digital bit-serial signal processing

Dipositif de circuit à traitement de données digital sériel par bit

(84) Benannte Vertragsstaaten:
**DE FR GB IT NL SE**

(43) Veröffentlichungstag der Anmeldung:
**17.06.1992 Patentblatt 1992/25**

(73) Patentinhaber: **SIEMENS AKTIENGESELLSCHAFT
80333 München (DE)**

(72) Erfinder:
• **Gazsi, Lajos, Dr.
40239 Düsseldorf (DE)**

• **Caldera, Peter
A-9500 Villach (AT)**

(56) Entgegenhaltungen:
**EP-A- 0 238 300       US-A- 4 285 047**

• **MOTOROLA, AN-286, Appl. Note Integr. Circuits Renschler et al: 'Binary addition using MRTL integrated circuits', 1967, USA**

## Beschreibung

Die Erfindung betrifft eine Schaltungsanordnung zur digitalen Bit-seriellen Signalverarbeitung.

Die Bit-serielle Verarbeitung von zeit- und amplitudendiskreten Daten an sich ist der Bit-parallelen Verarbeitung in mehreren Punkten überlegen. So sind beispielsweise für die Bit-serielle Verarbeitung nur wenige Anschlüsse und Leitungen notwendig, wie auch insgesamt der Schaltungsaufwand für die Verarbeitung der Daten selbst gering ist. Der Aufwand steigt dabei in weitaus geringerem Maße mit der Wortlänge der Daten, als dies bei Bit-paralleler Verarbeitung der Fall ist. Darüber hinaus ist der Datenfluß bedeutend höher. Diese Eigenschaften sind vor allem für Realisierungen in höchstintegrierter Technik von großem Vorteil, da sehr kompakte und effektive Topologien dadurch ermöglicht werden.

Bei Bit-serieller Verarbeitung ist jedoch sowohl zum Steuern als auch insbesondere zum Laufzeitausgleich für unterschiedliche Datenpfade und zur Bearbeitung des Vorzeichens ein sehr hoher schaltungstechnischer Aufwand erforderlich. Hinzu kommt eine insgesamt lange Verarbeitungsdauer. Vor allem bei Bitseriell arbeitenden Anordnungen, die Rückkopplungen aufweisen, wie beispielsweise rekursive Digitalfilter allgemein und Wellendigitalfilter im besonderen, oder die im Zeitmultiplexbetrieb arbeiten, vervielfachen sich Schaltungsaufwand und Verarbeitungszeit. Aufgrund dessen wird bisweilen überwiegend eine Bit-parallele Verarbeitung einer Bitseriellen Verarbeitung vorgezogen.

Aus dem Stand der Technik Dokument EP 0238300 A2 ist eine serielle digitale Signalverarbeitungs schaltung bekannt. Die Schaltung besteht aus zwei seriell beschreibbaren Eingangsschieberegistern, denen jeweils eine Vorzeichenwiederholungseinrichtung zugeordnet ist. Den Eingangsschieberegistern ist eine Recheneinrichtung nachgeordnet, die Ausgangsdaten seriell an ein Ausgangsdatenregister leitet. Die Register werden durch ein von einer Kontrolleinheit stammendes Taktsignal getaktet, wobei das Eingangsschieberegister mit einer ersten und das Ausgangsschieberegister mit einer zweiten Taktrate getaktet wird. Eine rekursive Signalverarbeitung ist hierbei nicht möglich.

Aufgabe der Erfindung ist es, eine Schaltungsanordnung zur digitalen Bit-seriellen Signalverarbeitung anzugeben, bei der ein geringer Schaltungsaufwand erforderlich ist und die eine kurze Signalverarbeitungszeit aufweist.

Diese Aufgabe wird durch eine Schaltungsanordnung gemäß den Patentansprüchen 1 und 3 gelöst. Ausgestaltungen und Weiterbildungen des Erfindungsgedankens sind in Unteransprüchen gekennzeichnet.

Die Erfindung wird nachfolgend anhand der in den Figuren der Zeichnung dargestellten Ausführungsbeispiele näher erläutert.
Es zeigt:

Figur 1　　ein erstes Ausführungsbeispiel einer erfindungsgemäßen Schaltungsanordnung,

Figur 2　　die Struktur eines gegebenen Wellendigitalfilters und

Figur 3　　die Realisierung des Wellendigitalfilters nach Figur 2 mittels einer erfindungsgemäßen Schaltungsanordnung.

Eine erfindungsgemäße Schaltungsanordnung besteht allgemein aus n Eingangsschieberegistern, die jeweils mit einem Eingangsdatenwort parallel bzw. seriell beschrieben werden und die anschließend seriell durch Rechtsschieben ausgelesen werden, aus n jeweils den Eingangsschieberegistern zugeordneten Vorzeichenwiederholeinrichtungen, die beim Rechtsschieben der Eingangsdatenwörter das jeweilige Vorzeichen fortlaufend erzeugen und nachschieben, aus n Ausgangsschieberegistern, in die seriell durch Rechtsschieben Ausgangsdatenwörter bzw. Datenwörter eingelesen werden und die parallel und/oder seriell ausgelesen werden, aus k Rückkopplungsschieberegistern, in die parallel die Datenwörter eingeschrieben werden und die anschließend seriell durch Rechtsschieben ausgelesen werden, aus k den Rückkopplungsschieberegistern zugeordneten Vorzeichenwiederholeinrichtungen, sowie aus einer Recheneinrichtung.

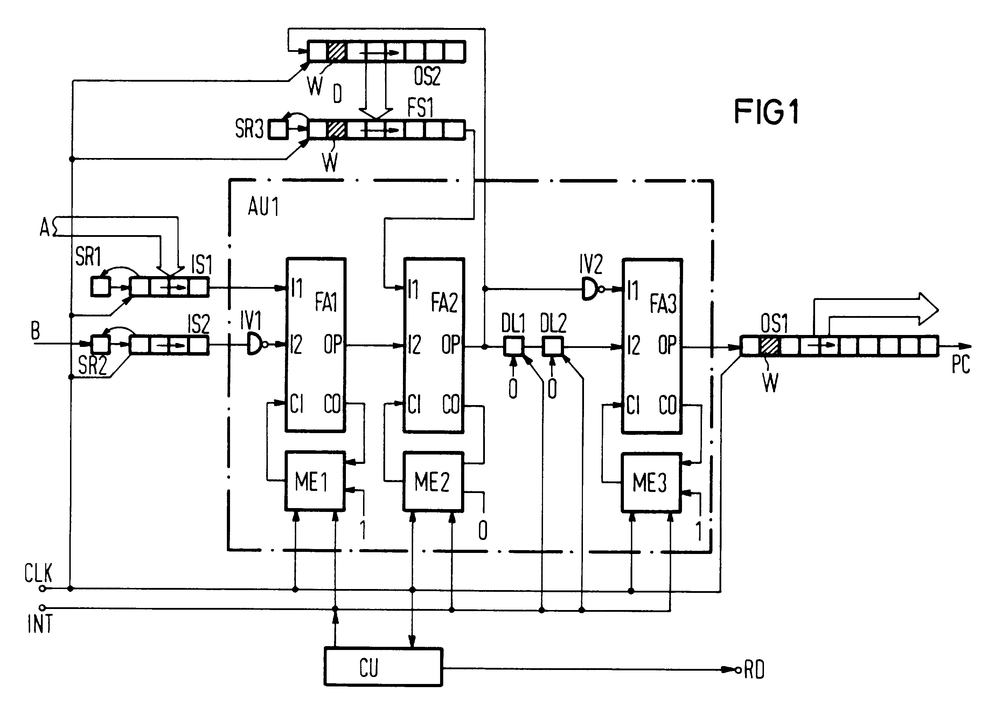

Bei dem in Figur 1 gezeigten Ausführungsbeispiel sind zwei Eingangsschieberegister IS1 und IS2 vorgesehen, wobei das Eingangsschieberegister IS1 parallel über einen nicht näher bezeichneten parallelen Bus mit einem Eingangsdatenwort A und das Eingangsschieberegister IS2 seriell über einen ebenfalls nicht näher bezeichneten seriellen Bus mit einem Eingangsdatenwort B beschrieben wird. Die Ausgänge der beiden Eingangsschieberegister IS1 und IS2 sind mit Eingängen einer Recheneinrichtung AU1 verbunden. Ein weiterer Eingang der Recheneinrichtung AU1 ist an den Ausgang eines Rückkopplungsschieberegisters FS1, dem ebenfalls eine Vorzeichenwiederholeinrichtung SR3 zugeordnet ist, angeschlossen. Das Rückkopplungsschieberegister FS1 ist über eine Parallelverbindung mit einem Ausgangsschieberegister OS2 gekoppelt. Das Ausgangsschieberegister OS2 wiederum ist an einen Ausgang der Recheneinrichtung AU1 angeschlossen, von dem es seriell ein Datenwort D übernimmt, welches es zu einem gegebenen Zeitpunkt parallel an das Rückkopplungsschieberegister FS1 übergibt. Mit einem weiteren Ausgang der Recheneinrichtung AU1 ist ein Ausgangsschieberegister OS1 verbunden, in das ein Ausgangsdatenwort C seriell eingelesen und parallel bzw. seriell über einen nicht näher bezeichneten parallelen bzw. seriellen Bus ausgelesen wird. Weiterhin ist eine Kontrolleinrichtung CU vorgesehen, der ein Taktsignal CLK zugeführt wird und die ein Initialisierungssingnal INT sowie ein Signal RD zur Freigabe des Ausgangsdatenwortes C abgibt.

Die Recheneinrichtung AU1 weist drei Volladdierer FA1, FA2 und FA3 auf, bei denen jeweils der Übertragsausgang CO und der Übertragseingang CI über ein Register ME1, ME2 und ME3, das beispielsweise durch ein D-Flip-Flop oder ein Master-Slave-Flip-Flop gebildet wird, miteinander gekoppelt sind. Beim Volladdierer FA1 ist dabei ein Eingang I1 direkt mit dem Ausgang des Eingangsschieberegisters IS1 und ein anderer Eingang I2 über einen Inverter IV1 mit dem Ausgang des Ausgangsschieberegisters IS2 verbunden. Der Ausgang des Volladdierers FA1 ist mit einem Eingang I2 des Volladdierers FA2 verschaltet, dessen anderer Eingang I1 an den Ausgang des Rückkopplungsschieberegisters FS1 angeschlossen ist. Beim Volladdierer FA3 ist ein Eingang I1 über den Invertierer IV2 und der andere Eingang I2 unter Zwischenschaltung zweier Verzögerungselemente DL1 und DL2 in Reihe an den Ausgang des Volladdierers FA2 gelegt, an dem zusätzlich auch der Eingang des Ausgangsschieberegisters OS2 angeschlossen ist. Der Ausgang des Volladdierers FA3 ist mit dem Eingang des Ausgangsschieberegisters OS1 verbunden.

Bevor zwei Eingangsdatenwörter A und B in die Eingangsschieberegister IS1 und IS2 eingeschrieben werden, wird die Recheneinrichtung AU1 rückgesetzt, d.h. in einen festgelegten Anfangszustand gebracht. Dazu werden alle in der Recheneinrichtung AU1 enthaltenen Register und Verzögerungselemente ME1, ME2, ME3 und DL1, DL2 bei Auftreten des Initialisierungssignals INT jeweils auf einen bestimmten logischen Zustand gesetzt. Im gezeigten Ausführungsbeispiel werden dazu die Verzögerungselemente DL1 und DL2 sowie das Register ME2 gleich einer logischen Null und die Register ME1 und ME3 gleich einer logischen Eins gesetzt. Die Eingangsschieberegister IS1 und IS2, das Rückkopplungsschieberegister FS1 und die Ausgangsschieberegister OS1 und OS2 können dabei ebenfalls beispielsweise gleich einer logischen Null gesetzt werden. Dies ist prinzipiell jedoch nicht notwendig, da diese Register auch ohne weiteres überschrieben werden können.

Nach dem Einstellen des festgelegten Anfangszustands werden die beiden Eingangsdatenwörter A und B parallel bzw. seriell in die entsprechenden Eingangsschieberegister IS1 und IS2 eingelesen. Im gezeigten Ausführungsbeispiel umfassen die Eingangsdatenwörter drei Bit für den Absolutwert und ein Vorzeichenbit, wobei das niederwertigste Bit ganz rechts und das Vorzeichenbit ganz links in das jeweilige Eingangsschieberegister eingeschrieben werden. Anschließend werden die Eingangsschieberegister IS1 und IS2 durch Rechtsschieben ausgelesen. Alle Schiebeoperationen sowie alle Speicher- und Verzögerungsoperationen erfolgen unter Zeittaktsteuerung. Dazu ist an die entsprechenden Elemente das Taktsignal CLK geführt. Das Vorzeichenbit wird auch der dem jeweiligen Eingangsschieberegister IS1 bzw. IS2 zugeordneten Vorzeichenwiederholeinrichtung SR1 bzw. SR2 zugeführt, welche das Vorzeichenbit während der Schiebeoperation fortlaufend erzeugt und in die dabei freiwerdende Vorzeichenstelle einschiebt.

In der Recheneinrichtung AU1 wird das Eingangsdatenwort B seriell vom Eingangsdatenwort A subtrahiert. Als Subtraktionseinrichtung sind der Volladdierer FA1, der Invertierer IV1 sowie das mit einer logischen Eins als Anfangszustand belegte Register ME1 vorgesehen. Die Differenz der beiden Eingangsdatenwörter A und B wird mittels des Volladdierers FA2 und das mit einer logischen Null als Anfangszustand belegten Registers ME2 als Additionseinrichtung mit dem seriell aus dem Rückkopplungsregister FS1 ausgelesenen Datenwortes D addiert. Das Datenwort D wird zu dem Zeitpunkt, an dem die Eingangsdatenwörter A und B in die entsprechenden Eingangsschieberegister IS1 und IS2 eingeschrieben werden, vom Ausgangsschieberegister OS2 parallel in das Rückkopplungsschieberegister FS1 übernommen. Das Rückkopplungsschieberegister FS1 wird dann synchron zu den beiden Eingangsschieberegistern IS1 und IS2 durch Rechtsschieben seriell ausgelesen. Das Vorzeichen wird dabei durch die Vorzeichenwiederholeinrichtung SR3 ebenfalls fortlaufend erzeugt und nachgeschoben. Das Datenwort am Ausgang des Volladdierers FA2 - das Datenwort D - wird unter Taktsteuerung und synchron zu den Eingangsschieberegistern SR1 und SR2 sowie dem Rückkopplungsschieberegister FS1 seriell eingeschrieben. Erfolgt zu bestimmten Zeitpunkten, beispielsweise zu bestimmten Abtastzeitpunkten eines gegebenen Signals, das Einschreiben der Eingangsdatenworte A und B in die Eingangsschieberegister IS1 und IS2 bzw. des Datenwortes D in das Rückkopplungsschieberegister FS1, so werden anschließend zu der Differenz der aktuellen Eingangsdatenworte A und B das vorherige Datenwort D hinzuaddiert, wobei die Summe nun das aktuelle Datenwort D bildet. Damit ergibt sich aufgrund der um einen Abtastwert verzögerten Rückkopplung ein zeitdiskretes Integrationsverhalten.

Das Integrationsergebnis wird nun mittels des nachfolgenden Volladdierers FA3 sowie des Registers ME3, des Inverters IV2 und der beiden Verzögerungselemente DL1 und DL2 mit einem konstanten Faktor, der beispielsweise gleich Drei ist, multipliziert. Der Volladdierer FA3 in Verbindung mit dem Inverter IV2 und dem mit einer logischen Eins als Anfangszustand belegten Register ME3 bildet prinzipiell einen Subtrahierer. Die mit einer logischen Null als Anfangszustand belegten Verzögerungselemente DL1 und DL2 bewirken eine Multiplikation mit Vier. Insgesamt also wird das Datenwort D mit 4 - 1, also mit 3 multipliziert. Das Ergebnis dieser Multiplikation mit dem konstanten Faktor 3 ergibt das Ausgangsdatenwort C, dessen Wertebereich sich gegenüber dem Datenwort D auf das Dreifache vergrößert. Aus diesem Grund ist auch das Ausgangsschieberegister OS1 gegenüber dem Ausgangsschieberegister OS2 um zwei Bit verlängert. Ausgangsschieberegister OS2 und Rückkopplungsschieberegister FS1 sind gegenüber den beiden Eingangsschieberegistern IS1 und IS2 um vier Bit länger. Dabei sei beim vorliegenden Ausführungsbeispiel davon auszugehen, daß im ungünstigsten Fall die fortlaufende Integration der Differenz der Eingangsdatenwörter A und B eine Verachtfachung des Wertebereichs bewirkt, was eine Verlängerung des Ausgangsschieberegisters OS2 und des Rückkopplungsschieberegisters FS1 um drei Bit zur Folge hat. Ein weiteres Bit W ist bei diesen Schieberegistern ebenso wie beim Ausgangsschieberegister OS1 zusätzlich zur Überwachung des höherwertigsten Bits und damit zur Detektion eines eventuell auftretenden Überlaufs vorgesehen. Beim Überschreiten des vorgegebenen Wertebereichs wird diese zwischen Vorzeichen und höherwertigstem Bit angeordnete Stelle des jeweiligen Schieberegisters beschrieben und stellt nun das höherwertigste Betragsbit dar, das dann beispielsweise zur weiteren Auswertung abgefragt werden kann.

Wenn das Ausgangsdatenwort C vollständig in das Ausgangsschieberegister OS1 eingeschrieben ist, wird das Ausgangsdatenwort C parallel und seriell ausgelesen, und die Recheneinheit AU1 mittels des Signals INT in den festgelegten Anfangszustand gebracht.

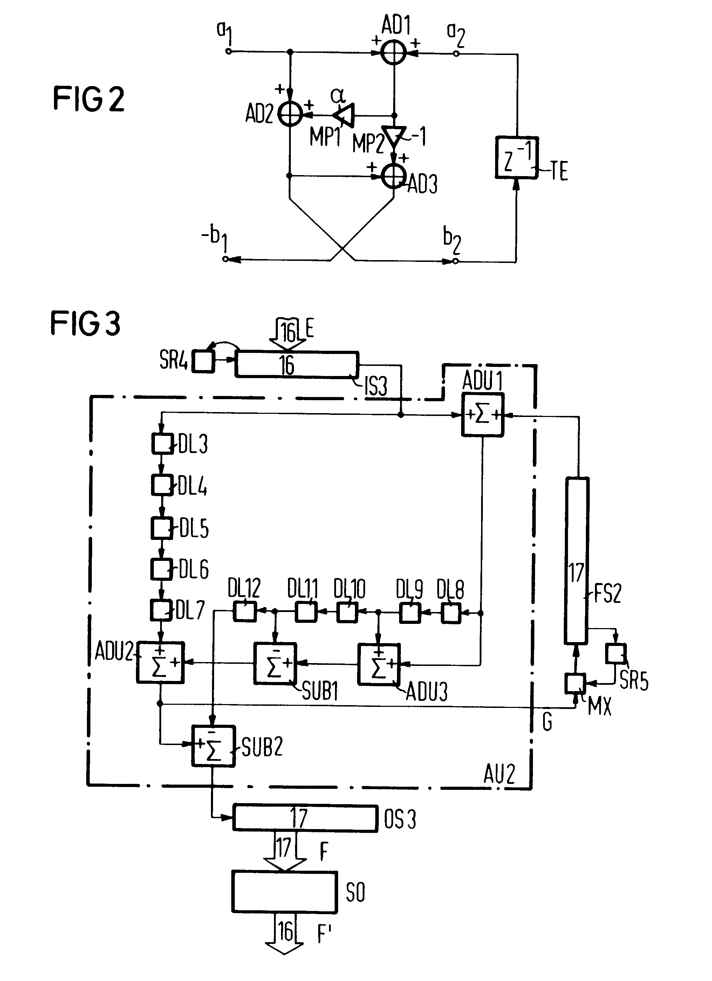

Ein bevorzugtes Anwendungsgebiet für erfindungsgemäße Schaltungsanordnungen sind digitale Filter, insbesondere Wellendigitalfilter. Figur 2 der Zeichnung zeigt strukturiell eine Ausführungsform eines gegebenen Wellendigitalfilters. Ein Eingangssignal $a_1$ ist dabei zum einen an einen Eingang eines ersten Addierers AD1, dessen anderer Eingang mit einem zweiten Eingangssignal $a_2$ belegt ist, und zum anderen an einen Eingang eines zweiten Addierers AD2, dessen anderer Eingang mit dem mittels eines ersten Multiplizierers MP1 mit einem konstanten Faktor $\alpha$ multiplizierten Ausgangssignal des ersten Addierers AD1 belegt ist, geführt, wobei der Faktor $\alpha$ gleich -0,34375 gewählt wurde. Das Ausgangssignal des ersten Addierers AD1 ist mittels eines zweiten Multiplizierers MP2 invertiert an einem Eingang eines dritten Addierers AD3 angeschlossen, dessen anderer Eingang mit dem Ausgangssignal des zweiten Addierers AD2 beaufschlagt ist. Der Ausgang des dritten Addierers AD3 führt ein erstes Ausgangssignal $-b_1$ und der Ausgang des zweiten Addierers AD2 ein zweites Ausgangssignal $b_2$. Das zweite Eingangssignal $a_2$ ist das um einen Abtastwert verzögerte zweite Ausgangssignal $b_2$. Die Verzögerung um einen Abtastwert des zweiten Ausgangssignals $b_2$ erfolgt mit einem Verzögerungselement TE.

In Figur 3 der Zeichnung ist die Realisierung des Wellendigitalfilters nach Figur 2 mittels einer erfindungsgemäßen Schaltungsanordnung dargestellt. Das erste Eingangssignal $a_1$ ist durch ein Eingangsdatenwort E gegeben, das zu jedem Abtastzeitpunkt parallel in ein Eingangsschieberegister IS3 eingeschrieben wird. Das Eingangsdatenwort E sowie alle anderen Datenwörter sind dabei so normiert, daß ausschließlich gebrochene Zahlen, deren Betrag kleiner als eins ist, zugelassen sind, während im Ausführungsbeispiel nach Figur 1 als Datenwörter nur ganze Zahlen zugelassen sind. Der Wert des Eingangsdatenwortes E repräsentiert dabei beispielsweise die diskretisierten Amplituden eines analogen Signals zu den jeweiligen Abtastzeitpunkten. Daraufhin wird das Eingangsdatenwort E seriell durch Rechtsschieben ausgelesen. Die freiwerdenden Stellen werden dabei, wie bereits bei Figur 1 dargelegt, jeweils mit dem Vorzeichen durch eine Vorzeichenwiederholeinrichtung SR4 aufgefüllt. Unter Taktsteuerung - auf deren Darstellung in vorliegendem Ausführungsbeispiel ebenso wie auf die Darstellung des Setzens der Anfangsbedingung verzichtet wurde, da diese Funktionen prinzipiell zu denen in Figur 1 gezeigten identisch sind - wird das seriell ausgelesene Eingangsdatenwort E zum einen einer Kette von fünf Verzögerungselementen DL3 bis DL7 und zum anderen einem Eingang einer Addiereinrichtung ADU1 zugeführt, deren anderer Eingang mit dem Ausgang eines Rückkopplungsschieberegisters FS2 verbunden ist. Die Addiereinrichtung ADU1 besteht ebenso wie zwei weitere Addiereinrichtungen ADU2 und ADU3 aus jeweils einem Volladdierer und einem Speicherelement, die in der aus Figur 1 bekannten Weise miteinander verschaltet sind. Zudem sind zwei Subtrahiereinrichtungen SUB1 und SUB2 vorgesehen, die aus jeweils einem Volladdierer, einem Register und einem Invertierer bestehen und deren Aufbau ebenfalls aus Figur 1 hervorgeht.

Der Ausgang der Addiereinrichtung ADU1 ist zum einen auf eine Kette von fünf Verzögerungselementen DL8 bis DL12 geführt und zum anderen mit einem Eingang der Addiereinrichtung ADU3 verbunden, deren anderer Eingang an dem Ausgang des Verzögerungselementes DL9 angeschlossen ist. Der Ausgang der Addiereinrichtung ADU3 wiederum ist mit dem nichtinvertierenden Eingang der Subtrahiereinrichtung SUB1 gekoppelt, deren invertierender Eingang mit dem Ausgang des Verzögerungselements DL11 verbunden ist und deren Ausgang auf einen Eingang der Addiereingang ADU2 geführt ist. Der andere Eingang der Addiereinrichtung ADU2 ist an den Ausgang des Verzögerungselements DL7 angeschlossen. Der Ausgang der Addiereinrichtung ADU2 führt ein dem Signal $b_2$ entsprechendes Datenwort G und ist mit dem nichtinvertierenden Eingang der Subtrahiereinrichtung SUB2 sowie mit einem Eingang eines Multiplexers MX verbunden, dessen anderer Eingang an den Ausgang einer dem Rückkopplungsschieberegister FS2 zugeordneten Vorzeichenwiederholeinrichtung SR5 angeschlossen ist. Der Ausgang des Multiplexers MX ist mit dem Eingang des Rückkopplungsschieberegisters FS2 und der Ausgang des Verzögerungselementes DL12 ist mit dem invertierenden Eingang der Subtrahiereinrichtung SUB2 gekoppelt. Am Ausgang der Subtrahiereinrichtung SUB2 ist ein Ausgangsschieberegister OS3 angeschlossen. Die Addiereinrichtungen ADU1, ADU2, ADU3, die Subtrahiereinrichtungen SUB1, SUB2, sowie die Verzögerungselemente DL1 bis DL12 bilden eine Recheneinheit AU2.

Bei der in der Recheneinheit AU2 durchzuführenden Multiplikation mit dem konstanten Faktor $\alpha$ wird von einer den Faktor $\alpha$ ergebenden Summe von gebroche-

nen Zahlen, die jeweils Potenzen von zwei sind, ausgegangen. Damit ergibt sich

$$\alpha = -0,34375 = -\frac{1}{2} + \frac{1}{8} + \frac{1}{32}.$$

Zur Multiplikation mit $\frac{1}{2}$ wird ein Verzögerungselement und zur Multiplikation mit $\frac{1}{8}$ und $\frac{1}{32}$ werden drei bzw. fünf Verzögerungselemente benötigt, die insgesamt eine Verschiebung des Datenworts nach rechts um eine, drei bzw. fünf Stellen bewirken. Beim vorliegenden Ausführungsbeispiel ist dazu die Kette von Verzögerungsgliedern DL8 bis DL12 mit den entsprechenden Abgriffen vorgesehen, während die Kette von Verzögerungsgliedern DL3 bis DL7 zum Laufzeitausgleich eingesetzt wird.

An den Ausgang der Subtrahiereinrichtung SUB2 ist ein Ausgangsschieberegister OS3 angeschlossen, in das ein dem ersten Ausgangssignal $-b_1$ entsprechendes Ausgangsdatenwort F seriell durch Rechtsschieben eingelesen wird. Das Ausgangsdatenwort F wird, nachdem es vollständig in das Ausgangsschieberegister OS3 eingeschrieben worden ist, parallel ausgelesen und einer Sättigungs- und Offsetüberwachungseinrichtung SO zugeführt. Diese leitet das Ausgangsdatenwort F unverändert weiter, wenn der darstellbare Wertebereich eingehalten wird oder setzt das Ausgangsdatenwort F unter Beibehaltung des Vorzeichens auf Maximalwert und leitet dieses dann weiter, wenn der darstellbare Wertebereich überschritten ist. Zur Feststellung eines Überlaufs dient, wie bereits bei Figur 1 beschrieben, eine zusätzliche Stelle zwischen Vorzeichenstelle und der Stelle für das höherwertigste Bit, die fortlaufend abgefragt wird. Von der Sättigungs- und Offsetüberwachungseinrichtung SO werden jedoch nur die oberen sechszehn Bit weitergeleitet, wodurch die Ausgangswortlänge nun wieder gleich der Eingangswortlänge ist.

Die Eingangswortlänge beträgt im vorliegenden Ausführungsbeispiel sechszehn Bit. Die gleiche Länge weist daher auch das Eingangsschieberegister IS3 auf. Sowohl das Rückkopplungsschieberegister FS2 als auch das Ausgangsschieberegister OS3 weisen dagegen die Länge von siebzehn Bit auf. Das Rückkopplungsschieberegister FS2 ist dabei so zu bemessen, daß eine Verzögerung um einen Abtastwert erreicht wird. Ist die Länge des eingelesenen Datenworts dabei kleiner als die Länge des Rückkopplungsschieberegisters, so werden durch eine Vorzeichenwiederholeinrichtung SR5 die freien Stellen mit dem entsprechenden Vorzeichen fortlaufend beschrieben. Beim gezeigten Ausführungsbeispiel ist die Wortlänge jedoch gleich einundzwanzig Bit. Beim Einlesen des Ausgangsdatenwortes F in das Ausgangsschieberegister OS3 werden daher vier Bit, nämlich die vier niederwertigsten Bit, nicht berücksichtigt, d.h., diese Bit werden beim Einlesen aus dem Schieberegister geschoben. In den siebzehn Bit des Ausgangsschieberegisters OS3 ist ein Bit zur Festlegung eines Überlaufs durch die nachgeschaltete Sättigungs- und Offsetüberwachungseinrichtung SO enthalten. Beim Einlesen des Datenworts G mit der Länge 21 Bit in das Rückkopplungsschieberegister FS2 mit der Länge 17 Bit wird jedoch anders vorgegangen, da dieses Schieberegister gleichzeitig auch wieder ausgelesen wird. Beim Einlesen der vier niederwertigsten Bit wird mittels des Multiplexers MX der Eingang des Rückkopplungsschieberegisters FS2 auf die Vorzeichenwiederholeinrichtung SR5 aufgeschaltet, die anstelle der vier niederwertigsten Bit des aktuellen, von der Addiereinrichtung ADU2 abgegebenen Datenworts G das Vorzeichen des sich im Rückkopplungsschieberegister FS2 befindlichen, vorherigen Datenwortes G fortlaufend erzeugt und nachschiebt. Danach gibt der Multiplexer MX das aktuelle Datenwort G für das Rückkopplungsschieberegister FS2 frei.

Die Funktionsweise einer erfindungsgemäßen Schaltungsanordnung beruht im wesentlichen auf einer im folgenden mit burst-seriellen Methode bezeichneten Datenverarbeitung. Das bedeutet, daß mit einer bestimmten Abtastrate, also immer zu bestimmten Abtastzeitpunkten, Eingangsdatenworte in eine erfindungsgemäße Schaltungsanordnung eingelesen werden und durch diese anschließend seriell unter Taktsteuerung abgearbeitet werden, wobei die Taktrate um soviel höher als die Abtastrate gewählt wird, daß vor dem nächsten Abtastzeitpunkt das Ergebnis der Verarbeitung als Ausgangsdatenwort ausgelesen wird und die Schaltungsanordnung wieder in den festgelegten Anfangszustand gebracht wird. Vorteil dabei ist, daß zum einen Abtastrate und Taktrate, abgesehen von obengenannter Bedingung, völlig voneinander unabhängig sind und zum anderen, daß der Schaltungsaufwand für Ablaufsteuerungen und Kontrolleinrichtungen äußerst gering ist. Wie aus Figur 1 zu ersehen ist, kann eine derartige Kontrolleinrichtung CU beispielsweise lediglich aus einem Zähler bestehen, der die Zyklen des Taktsignals CLK abzählt und bei Erreichen der zur vollständigen Bearbeitung des Ergebnisses erforderlichen Anzahl von Zyklen das Auslesen des Ausgangsdatenwortes C mittels eines Signals RD bewirkt und anschließend den festgelegten Anfangszustand mittels des Signals INT herstellt. Der Zähler kann gleichzeitig dazu verwendet werden, den Multiplexer MX zu steuern, indem an entsprechender Stelle der Zähler ein Steuersignal abgegriffen wird. Weiterhin ist es vorteilhaft, daß die erfindungsgemäße Schaltungsanordnung zwischen zwei Abtastzeitpunkten ohne zusätzlichen Aufwand mehrmals für Berechnungen herangezogen werden kann, also für Anwendung im Zeitmultiplexbetrieb sehr geeignet ist. Dazu muß lediglich die Taktrate entsprechend erhöht und jeweils ein neues Datenwort eingelesen werden. Damit wird eine gleichmäßige Auslastung der Schaltungsanordnung erzielt, was wiederum eine insbesondere für hochintegrierte Schaltungen vorteilhafte gleichmäßigere Stromaufnahme und damit eine Vermeidung von Stromspitzen zur Folge hat. Bei Reduzierung der Abtastrate muß dagegen nur jeweils eine entsprechende Anzahl von Bursts ausgelesen werden, d. h. bei einer Reduzierung auf ein 1/X wird nur jedes x-te Datenwort in das jeweilige Eingangsschieberegister eingelesen werden.

Die Ausgestaltung der Recheneinrichtung hängt vom jeweiligen Anwendungsfall ab und geht im wesentlichen von den Operationen Addition, Subtraktion und Verzögern aus. Bei diesen Operationen erhöht sich die Datenwortlänge und zwar beim Verzögern um die gleiche Anzahl von Stellen als Verzögerungselemente in dem jeweiligen Datenpfad enthalten sind sowie bei Addition und Subtraktion um die nächst größere ganze Zahl des Logarithmus dualis der Anzahl der Additionen und Subtraktionen im jeweiligen Datenpfad. Bei Schaltungsanordnungen mit mehreren Ausgangsdatenwörtern ist dabei, insbesondere zur Bestimmung des Berechnungsendes, der jeweils ungünstigste Datenpfad zu berücksichtigen. Demzufolge werden in Ausgestaltung der Erfindung die Rückkopplungsschieberegister und die diesen zugeordneten Ausgangsschieberegister soweit verlängert, daß das jeweilige Datenwort auch im ungünstigsten Fall darin vollständig eingelesen werden kann. Wesentlich hierbei ist, daß Kürzungen der Wortlänge überhaupt nicht oder erst beim das Ergebnis darstellenden Ausgangsdatenwort selbst vorgenommen werden, das heißt, die Länge von Datenwörtern innerhalb der Recheneinrichtung und bei Rückkopplungen nicht gekürzt wird. Mit geringfügigem Mehraufwand bei den Schieberegistern werden dabei große Aufwandseinsparungen bei den Kontrolleinrichtungen erzielt. Wie aus Figur 1 zu ersehen ist, ist dazu kein zusätzlicher Schaltungsaufwand für Kontrolleinrichtungen notwendig. Die maximal notwendige Anzahl von Vorzeichenwiederholeinrichtungen ist dabei gleich der Anzahl von Eingangsschieberegistern und Rückkopplungsschieberegistern.

Sind geringe Berechnungsfehler tolerierbar, so kann als definierte Anfangsbedingung der zuletzt vorliegende Zustand eingestellt werden, d.h. auf ein Einstellen einer definierten Anfangsbedingung ganz verzichtet werden.

Abschließend sei bemerkt, daß natürlich ein Pipelinebetrieb bei Verwendung eines zusätzlichen Pipelineregisters und eine Kaskadierung mehrerer erfindungsgemäßer Schaltungsanordnungen möglich ist, wobei Ausgangsschieberegister zusammen mit einer entsprechenden Vorzeichenwiederholeinrichtung als Eingangsschieberegister einer nachfolgenden Anordnung verwendet werden können. Bei komplexen Dateneinrichtungen ist damit eine weitere Aufwandsreduzierung möglich.

## Patentansprüche

1. Schaltungsanordnung zur digitalten Bit-seriellen Signalverarbeitung

- mit n Eingangsschieberegistern (IS1, IS2, IS3), die jeweils mit einem Eingangsdatenwort (A, B, E) parallel oder seriell beschrieben werden und die anschließend durch Rechtsschieben ausgelesen werden,
- mit jeweils den Eingangsschieberegistern (IS1, IS2, IS3) zugeordneten Vorzeichenwiederholeinrichtungen (SR1, SR2, SR4), die das Vorzeichen des Eingangsdatenwortes (A, B, E) beim Rechtsschieben fortlaufend erzeugen und nachschieben,
- mit einer den Eingangsschieberegistern (IS1, IS2, IS3) nachgeschalteten seriellen Recheneinrichtung (AU1, AU2), die seriell Ausgangsdatenworte (C, F) und seriell Datenworte (D) ausgibt,
- mit m Ausgangsschieberegistern (OS1, OS2, OS3), die mit den Ausgangsdatenworten (C, F) bzw. Datenworten (D) seriell beschrieben werden und die parallel und/oder seriell ausgelesen werden,
- mit k Rückkopplungsschieberegistern (FS1), die jeweils mit den in Ausgangsschieberegistern (OS2) abgelegten Datenworten (D) parallel beschrieben werden und die zur Weitergabe des Datenwortes (D) an die Recheneinheit (AU1) seriell ausgelesen werden, sowie
- mit den Rückkopplungsschieberegistern (FS1) zugeordneten Vorzeichenwiederholeinrichtungen (SR3), die das Vorzeichen des Datenwortes (D) fortlaufend erzeugen und nachschieben.

2. Schaltungsanordnung nach Anspruch 1,

- mit einer Kontrolleinrichtung (CU), die, nachdem alle Ausgangsdatenworte (C, F) vollständig in die jeweiligen Ausgangsschieberegister (OS1, OS3) eingeschrieben sind, das Auslesen der Eingangsschieberegister (IS1, IS2, IS3) und das Beschreiben der Ausgangsschieberegister (OS1, OS2, OS3) beendet, die Recheneinheit (AU1, AU2) in einen festgelegten Anfangszustand bringt und die Eingangsschieberegister (IS1, IS2, IS3) zum Einschreiben neuer Eingangsdatenworte (A, B, E) freigibt.

3. Schaltungsanordnung zur digitalen Bit-seriellen Signalverarbeitung mit n Eingangsschieberegistern (IS1,IS2,IS3), die jeweils mit einem

   Eingangsdatenwort (A,B,E) parallel oder seriell beschrieben werden und die anschließend durch Rechtsschieben ausgelesen werden, mit jeweils den Eingangsschieberegistern (IS1,IS2,IS3) zugeordneten Vorzeichenwiederholeinrichtungen (SR1,SR2,SR4), die das Vorzeichen des Eingangsdatenwortes (A,B,E) beim Rechtsschieben fortlaufend erzeugen und nachschieben,

mit einer den Eingangsschieberegistern (IS1,IS2,IS3) nachgeschalteten seriellen Recheneinrichtung (AU1,AU2), die seriell Ausgangsdatenworte (C,F) und seriell Datenworte (G) ausgibt,

mit m Ausgangsschieberegistern (OS1,OS3), die mit den Ausgangsdatenworten seriell beschrieben werden und die parallel und/oder seriell ausgelesen werden,

mit einer Kontrolleinrichtung (CU), die, nachdem alle Ausgangsdatenworte (C,F) vollständig in die jeweiligen Ausgangsschieberegister (OS1, OS3) eingeschrieben sind, das Auslesen der Eingangsschieberegister (IS1,IS2,IS3) und das Beschreiben der Ausgangsschieberegister (OS1,OS3) beendet, die Recheneinheit (AU1, AU2) in einen festgelegten Anfangszustand bringt und die Eingangsschieberegister (IS1,IS2,IS3) zum Einschreiben neuer Eingangsdatenworte (A,B,E) freigibt,

mit l Rückkopplungsschieberegistern (FS2), in die die genannten Datenworte (G), die von der Recheneinrichtung (AU2) übernommen und dieser wieder zugeführt werden, seriell durch Rechtsschieben eingeschrieben und gleichzeitig ausgelesen werden, mit den Rückkopplungsschieberegistern (FS2) zugeordnete Vorzeichenwiederholeinrichtungen (SR5) sowie mit den Rückkopplungsschieberegistern (FS2) vorgeschalteten Multiplexern (MX), die beim Beschreiben der jeweiligen Rückkopplungsschieberegister (FS2) für eine bestimmte Anzahl von niederwertigsten Bit der zu übernehmenden Datenworte (G) auf die entsprechenden Vorzeichenwiederholeinrichtungen (SR5) und anschließend auf die Recheneinrichtung (AU2) aufgeschaltet sind, wobei die durch die Vorzeichenwiederholeinrichtungen (SR5) erzeugten und nachgeschobenen Vorzeichen gleich den Vorzeichen der auszulesenden Datenworte (G) sind.

4. Schaltungsanordnung nach Anspruch 1 oder 2, **dadurch gekennzeichnet,**

daß die Länge des Rückkopplungsschieberegisters (FS1) größer oder gleich der Länge des längsten auftretenden Datenwortes ist.

5. Schaltungsanordnung nach Anspruch 1 oder 2 oder 4, **dadurch gekennzeichnet,**

daß das Beschreiben und das Auslesen der Rückkopplungsschieberegister (FS1) synchron zum Beschreiben und Auslesen der Eingangsschieberegister (IS1,IS2) erfolgt.

6. Schaltungsanordnung nach Anspruch 3, **dadurch gekennzeichnet,**

daß das Auslesen der Rückkopplungsschieberegister (FS2) synchron zum Auslesen des Eingangsschieberegisters (IS3) erfolgt.

7. Schaltungsanordnung nach einem der Ansprüche 1 bis 6, **dadurch gekennzeichnet,**

daß Rückkopplungsschieberegister und Ausgangsschieberegister (FS1,FS2,OS1,OS2) um ein oder mehrere Bit (W) zur Überlaufüberwachung verlängert sind.

8. Schaltungsanordnung nach Anspruch 3 oder 6, **dadurch gekennzeichnet,**

daß beim festgelegten Anfangszustand alle Stellen des Rückkopplungsschieberegisters (FS1) gleich Null gesetzt sind.

9. Schaltungsanordnung nach einem der Ansprüche 1 bis 8, **dadurch gekennzeichnet,**

daß die Recheneinrichtung (AU1,AU2) mindestens einen Volladdierer (FA2) aufweist, dem Datenworte seriell eingegeben werden und der seriell Datenworte ausgibt,

daß Übertragungsausgang (CO) und Übertragungseingang (CI) des Volladdierers (FA2) über ein Register (ME2) miteinander gekoppelt sind, und

daß beim definierten Anfangszustand das Register (ME2) eingangsseitig mit einer logischen Null belegt ist.

10. Schaltungsanordnung nach einem der Ansprüche 1 bis 9, **dadurch gekennzeichnet,**

daß die Recheneinrichtung (AU1,AU2) mindestens einen Volladdierer (FA1,FA3) aufweist, dem Datenworte seriell eingegeben werden und der seriell Datenworte abgibt,

daß einem Eingang (I1,I2) des Volladdierers (FA1,FA3) ein Inverter (IV1,IV2) vorgeschaltet ist,

daß Übertragsausgang (CO) und Übertragseingang (CI) des Volladdierers über ein Register (ME1,ME3) miteinander gekoppelt sind, und

daß beim definierten Anfangszustand das Register (ME1,ME3) eingangsseitig mit einer logischen Eins belegt ist.

11. Schaltungsanordnung nach einem der Ansprüche 1 bis 10, **dadurch gekennzeichnet,**

daß die Recheneinrichtung (AU1) mindestens einen Volladdierer (FA3) aufweist, dessen einer Eingang (I1) über ein oder mehrere Verzögerungselemente (DL1,DL2) mit dem anderen Eingang (I2) gekoppelt ist.

12. Schaltungsanordnung nach einem der Ansprüche 1 bis 11, **gekennzeichnet**

durch eine mit einem Ausgangsschieberegister (OS3) verbundene Überwachungseinrichtung (SO), die das Ausgangsdatenwort (F) dahingehend überprüft, ob ein gegebener Wertebereich eingehalten wird, und die das Ausgangsdatenwort (F) weiterleitet, wenn der Wertebereich eingehalten wird oder das Ausgangsdatenwort (F) unter Beibehaltung des Vorzeichens auf Maximalwert setzt, wenn der Wertebereich nicht eingehalten wird.

13. Schaltungsanordnung nach Anspruch 12, **dadurch gekennzeichnet,**

daß die Länge des Ausgangsdatenwortes (F) durch die Überwachungseinrichtung (SO) verkürzt wird.

14. Schaltungsanordnung nach einem der Ansprüche 1 bis 13, **dadurch gekennzeichnet,**

daß ein Pipelineregister vorgesehen ist, das einen Pipelinebetrieb ermöglicht.

15. Schaltungsanordnung nach einem der Ansprüche 1 bis 14, **dadurch gekennzeichnet,**

daß Ausgangsschieberegister zusammen mit einer entsprechenden Vorzeichenwiederholeinrichtung als Eingangsschieberegister einer nachfolgenden Anordnung vorgesehen sind, um eine Kaskadierung zu ermöglichen.

**Claims**

1. Circuit arrangement for digital bit-serial signal processing

   - having n input shift registers (IS1, IS2, IS3), into which in each case an input dataword (A, B, E) is written in parallel or serially, and which are subsequently read out by a shift right,
   - having in each case sign repetition devices (SR1, SR2, SR4) which are assigned to the input shift registers (IS1, IS2, IS3) and continuously generate and reshift the sign of the input dataword (A, B, E) in the shift right,
   - having a serial arithmetic unit (AU1, AU2) which is connected downstream of the input shift registers (IS1, IS2, IS3) and outputs output datawords (C, F) serially and datawords (D) serially,
   - having m output shift registers (OS1, OS2, OS3) into which the output datawords (C, F) or datawords (D) are written serially, and which are read out in parallel and/or serially,
   - having k feedback shift registers (FS1), into which in each case the datawords (D) stored in the output shift registers (OS2) are written in parallel, and which are read out serially in order to relay the dataword (D) to the arithmetic unit (AU1), and
   - having sign repetition devices (SR3) which are assigned to the feedback shift registers (FS1) and continuously generate and reshift the sign of the dataword (D).

2. Circuit arrangement according to Claim 1,

   - having a control device (CU) which, after all the output datawords (C, F) are written completely into the respective output shift registers (OS1, OS3), terminates the reading out of the input shift registers (IS1, IS2, IS3) and the writing in of the output shift registers (OS1, OS2, OS3), brings the arithmetic unit (AU1, AU2) into a fixed initial state, and clears the input shift registers (IS1, IS2, IS3) for writing in new input datawords (A, B, E).

3. Circuit arrangement for digital bit-serial signal processing having n input shift registers (IS1, IS2, IS3), into which in each case an input dataword (A, B, E) is written in parallel or serially, and which are subsequently read out by a shift right, having in each case sign repetition devices (SR1, SR2, SR4) which are assigned to the input shift registers (IS1, IS2, IS3) and continuously generate and reshift the sign of the input dataword (A, B, E) in the shift right,

   having a serial arithmetic unit (AU1, AU2) which is connected downstream of the input shift registers (IS1, IS2, IS3) and outputs output datawords (C, F) serially and datawords (G) serially, having m output shift registers (OS1, OS3) into which the output datawords are written serially, and which are read out in parallel and/or serially,

having a control device (CU) which, after all the output datawords (C, F) are written completely into the respective output shift registers (OS1, OS3), terminates the reading out of the input shift registers (IS1, IS2, IS3) and the writing in of the output shift registers (OS1, OS2, OS3), brings the arithmetic unit (AU1, AU2) into a fixed initial state, and clears the input shift registers (IS1, IS2, IS3) for writing in new input datawords (A, B, E), having 1 feedback shift registers (FS2), into/from which the said datawords (G), which are taken over from the arithmetic unit (AU2) and fed to the latter again, are written by a shift right and simultaneously read out, having sign repetition devices (SR5) assigned to the feedback shift registers (FS2), and having multiplexers (MX) which are connected upstream of the feedback shift registers (FS2) and which, during writing into the respective feedback shift registers (FS2), are connected for a specific number of least significant bits of the datawords (G) to be taken over to the corresponding sign repetition devices (SR5) and are subsequently connected to the arithmetic unit (AU2), the signs generated and reshifted by the sign repetition devices (SR5) being equal to the signs of the datawords (G) to be read out.

4. Circuit arrangement according to Claim 1 or 2, characterized in that the length of the feedback shift register (FS1) is greater than or equal to the length of the longest occurring dataword.

5. Circuit arrangement according to Claim 1 or 2 or 4, characterized in that writing into and reading out from the feedback shift registers (FS1) are performed synchronously with writing into and reading out from the input shift registers (IS1, IS2).

6. Circuit arrangement according to Claim 3, characterized in that reading out from the feedback shift registers (FS2) is performed synchronously with reading out from the input shift register (IS3).

7. Circuit arrangement according to one of Claims 1 to 6, characterized in that feedback shift registers and output shift registers (FS1, FS2, OS1, OS2) are lengthened by one or more bits (W) for overflow monitoring.

8. Circuit arrangement according to Claim 3 or 6, characterized in that all the positions of the feedback shift register (FS1) are set equal to zero in the case of the fixed initial state.

9. Circuit arrangement according to one of Claims 1 to 8, characterized in that the arithmetic unit (AU1, AU2) has at least one full adder (FA2), into which datawords are written serially and which outputs datawords serially,

in that the carry-out output (CO) and carry-in input (CI) of the full adder (FA2) are coupled to one another via a register (ME2), and in that the register (ME2) is occupied by a logic zero on the input side in the case of the defined initial state.

10. Circuit arrangement according to one of Claims 1 to 9, characterized in that the arithmetic unit (AU1, AU2) has at least one full adder (FA1, FA3), into which datawords are input serially and which outputs datawords serially,

in that an invertor (IV1, IV2) is connected upstream of an input (I1, I2) of the full adder (FA1, FA3), in that the carry-out output (CO) and carry-in input (CI) of the full adder are coupled to one another via a register (ME1, ME3), and in that the register (ME1, ME3) is occupied by a logic one on the input side in the case of the defined initial state.

11. Circuit arrangement according to one of Claims 1 to 10, characterized in that the arithmetic unit (AU1) has at least one full adder (FA3) of which one input (I1) is coupled to the other input (I2) via one or more time-delay elements (DL1, DL2).

12. Circuit arrangement according to one of Claims 1 to 11, characterized by a monitoring device (SO) which is connected to one output shift register (OS3) and checks the output dataword (F) as to whether a given value range is observed, and which relays the output dataword (F) if the value range is observed, or sets the output dataword (F) to a maximum value while preserving the sign if the value range is not observed.

13. Circuit arrangement according to Claim 12, characterized in that the length of the output dataword (F) is shortened by the monitoring device (SO).

14. Circuit arrangement according to one of Claims 1 to 13, characterized in that a pipeline register is provided which permits pipeline operation.

15. Circuit arrangement according to one of Claims 1 to 14, characterized in that output shift registers together with a corresponding sign repetition device are provided as input shift registers of a downstream arrangement, in order to permit cascading.

**Revendications**

1. Montage pour le traitement de signaux numériques en série par bit

   - comportant n registres (IS1, IS2, IS3) à décalage d'entrée, dans chacun desquels est écrit en parallèle ou en série un mot (A, B, E) de données d'entrée et qui sont ensuite lus par décalage à droite,
   - comportant des dispositifs (SR1, SR2, SR4) de répétition du signe, qui sont associés aux registres (IS1, IS2, IS3) à décalage d'entrée et qui produisent et font avancer en continu le signe du mot (A, B, E) de données d'entrée lors du décalage vers la droite,
   - comportant un dispositif (AU1, AU2) de calcul sériel, qui est monté en aval des registres (IS1, IS2, IS3) à décalage d'entrée et qui émet de manière sérielle des mots (C, F) de données de sortie et de manière sérielle des mots (D) de données,
   - comportant m registres (OS1, OS2, OS3) à décalage de sortie, dans lesquels des mots (C, F) de données de sortie et des mots (D) de données sont écrits de manière sérielle et qui sont lus en parallèle et/ou en série,
   - comportant k registres (FS1) à décalage de rétrocouplage, dans lesquels les mots (D) de données enregistrés dans des registres (OS2) à décalage de sortie sont écrits en parallèle et qui sont lus de manière sérielle pour transmettre le mot (D) de données à l'unité (AU1) de calcul, ainsi que
   - comportant des dispositifs (SR3) de répétition du signe, qui sont associés aux registres (FS1) à décalage de rétrocouplage et qui produisent et font avancer en continu le signe du mot (D) de données.

2. Montage suivant la revendication 1,

   - comportant un dispositif (CU) de contrôle qui, après que tous les mots (C, F) de données de sortie ont été totalement inscrits dans les registres (OS1, OS3) à décalage de sortie associés, met fin à la lecture des registres (IS1, IS2, IS3) à décalage d'entrée et à l'écriture dans les registres (OS1, OS2, OS3) à décalage de sortie, qui met l'unité (AU1, AU2) de calcul en un état initial fixé et qui libère des registres (IS1, IS2, IS3) à décalage d'entrée pour l'inscription de nouveaux mots (A, B, E) de données d'entrée.

3. Montage pour le traitement de signaux numériques en série par bit, comportant n registres (IS1, IS2, IS3) à décalage d'entrée, dans chacun desquels un mot (A, B, E) de données d'entrée est écrit en parallèle ou en série et qui sont lus ensuite par décalage vers la droite, comportant des dispositifs (SR1, SR2, SR4) qui sont associés au registre (IS1, IS2, IS3) à décalage d'entrée et qui produisent et font avancer en continu le signe du mot (A, B, E) de données d'entrée lors du décalage vers la droite,

   comportant un dispositif (AU 1, AU2) de calcul sériel, qui est monté en aval des registres (IS1, IS2, IS3) à décalage d'entrée et qui émet de manière sérielle des mots (G) de données, comportant m registres (OS1, OS3) à décalage de sortie, dans lesquels les mots de données de sortie sont écrits en série et qui sont lus en parallèle et/ou en série, comportant un dispositif (CU) de contrôle qui, après que tous les mots (C, F) de données de sortie ont été inscrits totalement dans les registres (OS1, OS3) à décalage de sortie associés, met fin à la lecture des registres (IS1, IS2, IS3) à décalage d'entrée et à l'écriture dans les registres (OS1, OS3) à décalage de sortie, qui met l'unité (AU1, AU2) de calcul en un état initial fixé et qui libère les registres (IS1, IS2, IS3) à décalage d'entrée pour l'inscription de nouveau mot (A, B, E) de données d'entrée, comportant i registres (FS2) à décalage de rétrocouplage, dans lesquels lesdits mots (G) de données, qui sont pris en charge par le dispositif (AU2) de calcul et qui y sont renvoyés, sont inscrits et en même temps lus de manière sérielle par décalage vers la droite, comportant des dispositifs (SR5) de répétition du signe associé aux registres (FS2) à décalage de rétrocouplage, ainsi que comportant des multiplexeurs qui sont montés en amont des registres (FS2) à décalage de rétrocouplage et qui, lors de l'écriture dans les registres (FS2) à décalage de rétrocouplage associés,

sont, pour un nombre déterminé de bits de plus petit poids des mots (G) de données à prendre en charge, branchés sur les dispositifs (SR5) de répétition de signes correspondants et ensuite sur le dispositif (AU2) de calcul, les signes qui sont produits et que l'on fait avancer par les dispositifs (SR5) de répétition de signes étant égaux aux signes des mots (G) de données à lire.

4. Montage suivant la revendication 1 ou 2, caractérisé

   en ce que la longueur du registre (FS1) à décalage de rétrocouplage est supérieure ou égale à la longueur du plus long mot de données qui apparaît.

5. Montage suivant la revendication 1, 2 ou 4,

caractérisé

en ce que l'écriture dans les registres (FS1 ) à décalage de rétrocouplage et la lecture de ces registres s'effectue en synchronisme avec l'écriture dans les registres (IS1, IS2) à décalage d'entrée et la lecture de ces registres.

6. Montage suivant la revendication 3, caractérisé

en ce que la lecture des registres (FS2) à décalage de rétrocouplage s'effectue en synchronisme avec la lecture du registre (IS3) à décalage d'entrée.

7. Montage suivant l'une des revendications 1 à 6, caractérisé

en ce que des registres (FS1, FS2) à décalage de rétrocouplage et des registres (OS1, OS2) à décalage d'entrée sont augmentés d'un bit ou de plusieurs bits (W) pour surveiller un déplacement de capacité.

8. Montage suivant la revendication 3 ou 6, caractérisé

en ce que, à l'état initial fixé, tous les emplacements du registre (FS1) à décalage de rétrocouplage sont mis à un état équivalent à zéro.

9. Montage suivant l'une des revendications 1 à 8, caractérisé

en ce que le dispositif (AU1, AU2) de calcul comporte au moins un additionneur (FA2) complet dans lequel des mots de données sont entrés en série et qui émet des mots de données en série,
en ce que la sortie (CO) de transmission et l'entrée (CI) de transmission de l'additionneur (FA2) complet sont couplées l'une à l'autre par l'intermédiaire d'un registre (ME2), et
en ce que, à l'état initial défini, le registre (ME2) est occupé par un O logique du côté d'entrée.

10. Montage suivant l'une des revendications 1 à 9, caractérisé

en ce que le dispositif (AU1, AU2) de calcul comporte au moins un additionneur (FA1, FA3) complet dans lequel des mots de données sont entrés en série et qui fournit des mots de données en série,
en ce qu'un inverseur (IV1, IV2) est monté en amont d'une entrée (11, 12) de l'additionneur (FA1, FA3) complet,

en ce que la sortie (CO) de transmission et l'entrée (CI) de transmission de l'additionneur sont couplées l'une à l'autre par l'intermédiaire d'un registre (ME1, ME3), et
en ce que, à l'état initial défini, le registre (ME1, ME3) est occupé par un 1 logique du côté de l'entrée.

11. Montage suivant l'une des revendications 1 à 10, caractérisé

en ce que le dispositif (AU1) de calcul comporte au moins un additionneur (FA3) complet dont une entrée (11) est couplée à l'autre entrée (12) par l'intermédiaire d'un élément de temporisation ou de plusieurs éléments (DL1, DL2) de temporisation.

12. Montage suivant l'une des revendications 1 à 11, caractérisé

par un dispositif (SO) de surveillance qui est relié à un registre (OS3) à décalage de sortie, qui vérifie pour le mot (F) de données de sortie si un intervalle de valeurs données est respecté et qui retransmet le mot (F) de données de sortie si l'intervalle de valeur est respecté ou qui met le mot (F) de données de sortie a une valeur maximum en conservant le signe, si l'intervalle de valeur n'est pas respecté.

13. Montage suivant la revendication 12, caractérisé

en ce que la longueur du mot (F) de données de sortie est raccourcie par le dispositif (SO) de surveillance.

14. Montage suivant l'une des revendications 1 à 13, caractérisé

en ce qu'il est prévu un registre pipeline qui permet un fonctionnement en pipeline.

15. Montage suivant l'une des revendications 1 à 14, caractérisé

en ce qu'il est prévu comme registres à décalage d'entrée d'un montage suivant, des registres à décalage de sortie conjointement avec un dispositif de répétition de signes correspondants, afin de permettre un montage en cascade.

FIG 1

EP 0 489 952 B1

# FIG 2

# FIG 3